# EUROPEAN PATENT APPLICATION

(11) **EP 3 345 837 A1**
(43) Date of publication of application: **11.07.2018**
(21) Application number: 17208641.5
(22) Date of filing: 17.01.2013
(51) Int. Cl.: B64D 27/26

(54) **GAS TURBINE ENGINE MOUNTING STRUCTURE WITH SECONDARY LOAD PATH**

(30) Priority: 29.01.2012 US 201213360750
(62) Divisional of application: 13151605.6
(71) Applicant: United Technologies Corporation, Farmington, CT 06032 (US)
(72) Inventor: SANDY, David F., Milford, CT 06460 (US); ZHENG, Zhijun, Avon, CT 06001 (US)
(74) Representative: Dehns

(57) **Abstract**

A connection for mounting an aircraft engine (20) to an aircraft pylon (62) has a plate (102) to be bolted to a portion (60) of an aircraft engine (20), and a body (104) extending rearwardly from the plate (102). The body (104) has a main pivot attachment (106) to a balance beam (108), which has thrust links (110) pivotally attached to the balance beam (108). A back-up connection (112) is included between the balance beam (108) and the body (104) such that the back-up connection (112) allows normal pivoting movement of the balance beam (108) relative to the body (104) without contact at the back-up connection (112).

## Description

### BACKGROUND OF THE INVENTION

This application relates to a structure for mounting an aircraft engine to an aircraft frame.

Gas turbine engines are typically mounted to an aircraft by attaching a pylon to an aircraft frame, and attaching the engine at forward and rear locations to the pylon.

A structure, known as a wiffle tree or balance beam, is utilized to provide a path for engine thrust loads between a pair of thrust links and the mount body. These thrust links are pivotally mounted to the balance beam and to the compressor housing. The balance beam is in turn pivotally mounted to the mount body. A shackle is mounted between the compressor housing and mount body to provide a vertical and lateral load path.

In the prior art, if one of the thrust links were to fail, there would be no reaction at the balance beam to counter engine thrust.

Should one of the thrust links fail, the reaction force may no longer be properly directed through the remaining link.

### SUMMARY OF THE INVENTION

In a featured embodiment, a connection mounting an aircraft engine to an aircraft pylon includes a plate to be bolted to a portion of an aircraft engine, and a body extending rearwardly from the plate. The body has a main pivot attachment to a balance beam, which is pivotally attached to thrust links. There is a back-up connection between the balance beam and the body, with clearance between the body and the balance beam at the back-up connection such that the back-up connection allows normal pivoting movement of the balance beam relative to the body without contact at the back-up connection.

In an embodiment according to the previous embodiment, the back-up connection is a pivot pin which has clearance with one of the body and the balance beam such that the normal pivoting movement about the main pivot attachment will occur without contact at the back-up connection.

In an embodiment according to the previous embodiment, the back-up connection is positioned between the plate and the main pivot attachment.

In an embodiment according to the previous embodiment, the back-up connection is positioned on an opposed side of the main pivot attachment relative to the plate.

In an embodiment according to the previous embodiment, the back-up connection is provided by a stop on one of the balance beam and the body, with the stop selectively engaging one of a pair of ears on the other of the balance beam and the body.

In an embodiment according to the previous embodiment, the stop is positioned on the body, and ears are positioned on the balance beam.

In an embodiment according to the previous embodiment, the stop and ears are positioned on an opposed side of the main pivot attachment relative to the plate.

In an embodiment according to the previous embodiment, the portion of the aircraft engine is a compressor housing.

In another featured embodiment, an aircraft includes an engine mounted to an aircraft pylon, and a connection mounting the engine to the pylon. The connection includes a plate bolted to a portion of the engine, and a body extending rearwardly from the plate. The body has a main pivot attachment to a balance beam that is attached to thrust links. A back-up connection is provided between the balance beam and the body, with clearance between the body and the balance beam at the back-up connection such that the back-up connection allows normal pivoting movement of the balance beam relative to said body without contact at the back-up connection.

In an embodiment according to the previous embodiment, the back-up connection is a pivot pin which has clearance with one of the body and the balance beam such that the normal pivoting movement about the main pivot attachment will occur without contact at the back-up connection.

In an embodiment according to the previous embodiment, the back-up connection is positioned between the plate and the main pivot attachment.

In an embodiment according to the previous embodiment, the back-up connection is positioned on an opposed side of the main pivot attachment relative to the plate.

In an embodiment according to the previous embodiment, the back-up connection is provided by a stop on one of the balance beam and the body, with the stop selectively engaging one of a pair of ears on the other of the balance beam and the body.

In an embodiment according to the previous embodiment, said stop is positioned on the body, and ears are positioned on the balance beam.

In an embodiment according to the previous embodiment, the stop and ears are positioned on an opposed side of the main pivot attachment relative to the plate.

In an embodiment according to the previous embodiment, the portion of the aircraft engine is a compressor housing.

These and other features of this application will be best understood from the following specification and drawings, the following of which is a brief description.

### BRIEF DESCRIPTION OF THE DRAWINGS

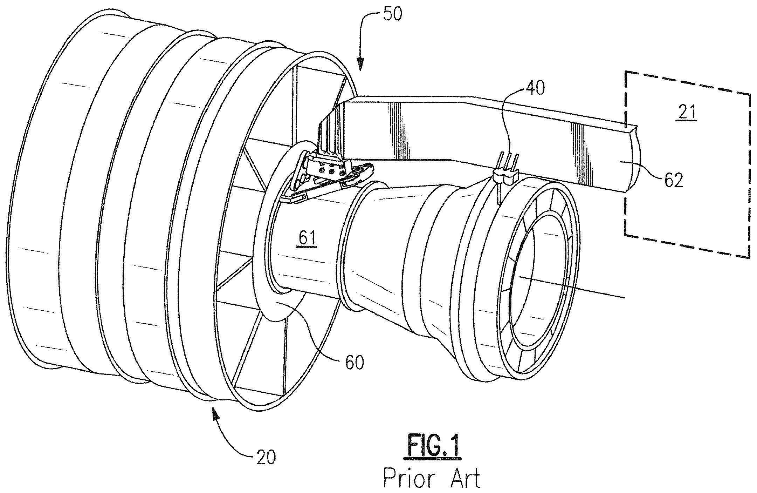

Figure 1 schematically shows the typical attachment of an aircraft engine to an aircraft frame.
Figure 2 shows detail of Figure 1.
Figure 3A shows a side view of a first embodiment mount structure.
Figure 3B shows a bottom view of the Figure 3A embodiment.
Figure 3C shows the Figure 3A embodiment at failure.
Figure 4 shows a second embodiment.
Figure 5 shows a third embodiment.

### DETAILED DESCRIPTION

Aircraft engine 20 is mounted to an aircraft frame, shown schematically at 21, through a pylon 62. As shown, there is forward mount structure 50 at a forward end which attaches the pylon 62 to a compressor housing 60, and rear mount structure 40. It may be possible that structure other than the compressor housing can be used to mount the engine to the pylon.

The forward mount structure 50 may include an arrangement 61 known as a "wiffle tree."

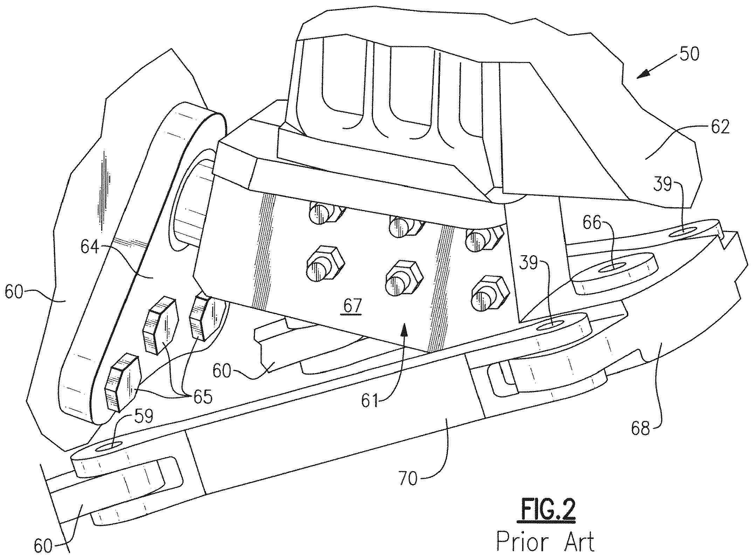

As shown in Figure 2, the arrangement 61 includes a plate or shackle 64 which is bolted at 65 to the compressor housing 60. A body 67 extends rearwardly from shackle 64, and is pinned at 66 such that it can pivot relative to a balance beam 68. The balance beam 68 is pivotally mounted at 39 to a pair of thrust links 70. Thrust links 70 are connected to the compressor housing 60 by pin 59.

Forces from the compressor housing are transmitted to the pylon 62 through the thrust links 70, and the direct connection to the shackle plate 64.

Should one of the thrust links 70 fail, the reaction force may no longer be properly directed.

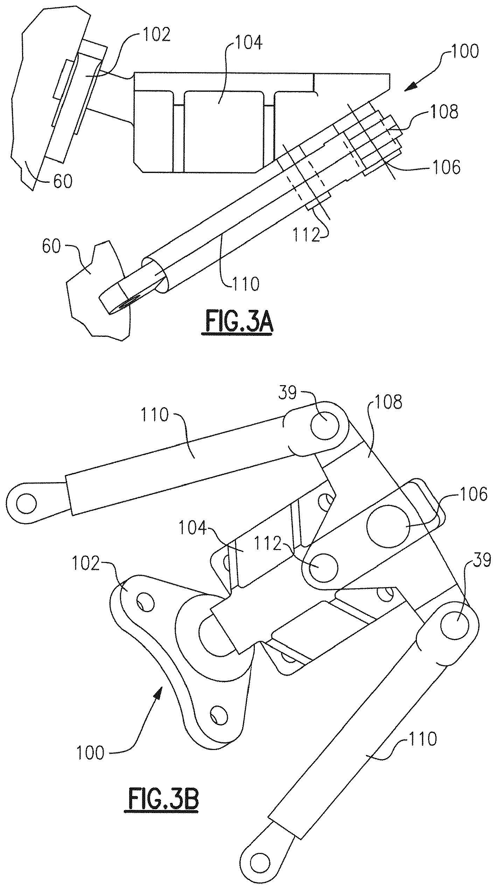

Figure 3A shows an embodiment 100 having a shackle plate 102, again bolted to the compressor housing 60. A body 104 extends rearwardly from the shackle plate to a pin 106 that pivotally mounts the balance beam 108. As shown, thrust links 110 also extend to the compressor housing 60.

A redundant pin 112 also connects the balance beam 108 to the body 104, as best shown in Figure 3B. The pin 112 may be positioned intermediate the shackle plate 102 and the main pin 106. The pin 112 is provided with a small amount of clearance such that it allows the limited pivotal movement that may typically occur between the balance beam 108 and the main pin 106. As an example, clearance on the order of .020 - .030" (.051 - .076 cm) of clearance may be provided.

During normal operation, the thrust links 110 react force between the balance beam 108 and the compressor housing 60.

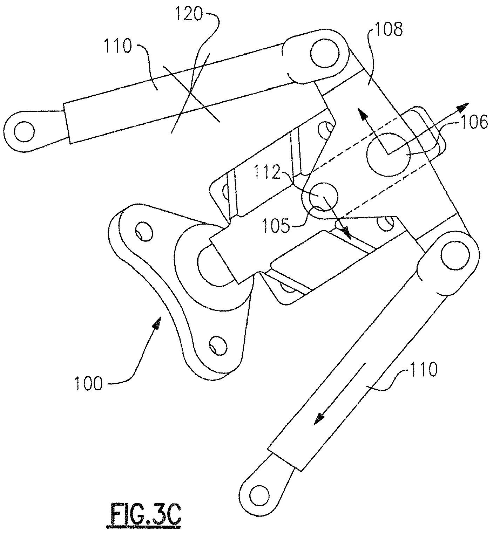

As shown in Figure 3C, there has been a failure at 120 of one of the thrust links 110. The pin 106 will react force toward the thrust link 110 that has failed, and the balance beam 128 will pivot to take up the clearance on the redundant pin 112 such that there is now contact at the point 105. This creates a reaction force that will balance out the connection, and still ensure an adequate mount between the engine and the pylon.

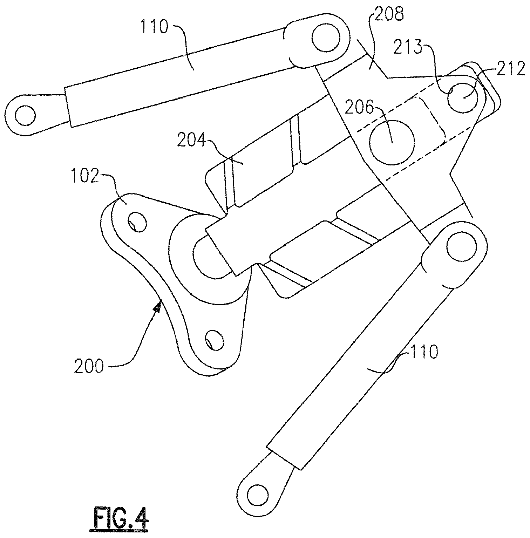

Figure 4 shows an alternative embodiment 200 wherein the redundant pin 212 is positioned on an opposed side of the main pin 206 from the shackle 102. The system will operate in the same manner, however, the contact in the event of a failure of the uppermost thrust link 110 would occur at the location 213, as the balance beam 208 pivots about the main pin 206 due to the imbalance of forces.

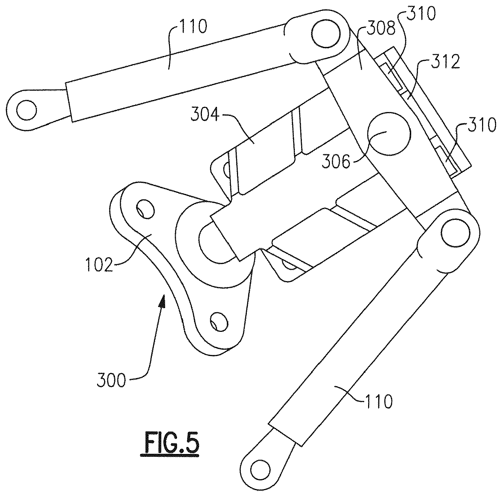

Figure 5 shows yet another embodiment 300, wherein the balance beam has ears 310 that are positioned with a small clearance from a stop 312 on the main body 304. Again, should a thrust link 110 fail in this embodiment, the balance beam 308 will pivot about the main link 306, and one of the ears 310 will contact the stop 312, such that the force can be transmitted in a manner similar to that described above with regard to Figure 3C.

In general, the embodiments disclose back-up connections that normally allow pivoting movement between the balance beam and the body, but will provide a surface to balance a reaction force should a thrust link fail.

Although embodiments of this invention have been disclosed, a worker of ordinary skill in this art would recognize that certain modifications would come within the scope of this invention. For that reason, the following claims should be studied to determine the true scope and content of this invention.

## Claims

1. A connection for mounting an aircraft engine (20) to an aircraft pylon (62) comprising:
a plate (102) to be bolted to a portion (60) of an aircraft engine (20), and a body (104; 204; 304) extending rearwardly from said plate (102);
said body (104; 204; 304) having a main pivot attachment (106; 206; 306) to a balance beam (108; 208; 308), said balance beam pivotally attached to thrust links (110); and
a back-up connection between said balance beam (108; 208; 308) and said body (104; 204; 304), there being clearance between said body and said balance beam at said back-up connection such that said back-up connection allows normal pivoting movement of said balance beam relative to said body without contact at said back-up connection.

2. The connection as set forth in claim 1, wherein said back-up connection is a pivot pin (102; 212) which has clearance with one of said body (104; 204) and said balance beam (108; 208) such that the normal pivoting movement about said main pivot attachment (106; 206) will occur without contact at said back-up connection.

3. The connection as set forth in claim 1 or 2, wherein said back-up connection is positioned between said plate (102) and said main pivot attachment (106).

4. The connection as set forth in claim 1 or 2, wherein said back-up connection is positioned on an opposed side of said main pivot attachment (206; 306) relative to said plate (102).

5. The connection as set forth in claim 1 or 3, wherein said back-up connection is provided by a stop (312) on one of said balance beam (308) and said body (304), said stop (312) selectively engaging one of a pair of ears (310) on the other of said balance beam and said body (304).

6. The connection as set forth in claim 5, wherein said stop (312) is positioned on said body (304), and said ears (310) are positioned on said balance beam (308).

7. The connection as set forth in claim 5 or 6, wherein said stop (312) and said ears (310) are positioned on an opposed side of said main pivot attachment (306) relative to said plate (102).

8. The connection as set forth in any preceding claim, wherein said portion of the aircraft engine (20) is a compressor housing (60).

9. An aircraft comprising:
an engine (20) mounted to an aircraft pylon (62); and
a connection as claimed in any preceding claim mounting said engine to the pylon (62), wherein said plate (102) is bolted to a portion (60) of the engine (20).
